# EUROPÄISCHE PATENTANMELDUNG

(11) **EP 3 153 666 A1**
(43) Veröffentlichungstag der Anmeldung: **12.04.2017**
(21) Anmeldenummer: 15188448.3
(22) Anmeldetag: 06.10.2015
(51) Int. Cl.: F01D 5/28, B22F 3/105, C04B 35/00

(54) **KERAMISCHE HYBRID-SCHAUFEL FÜR STRÖMUNGSMASCHINEN**

(71) Anmelder: MTU Aero Engines AG, 80995 München (DE)
(72) Erfinder: Borto, Artur, 28-130 Stopnica (PL); Kapusta, Piotr, 37-450 Stalowa Wola (PL); Luczyniec, Dawid, 22-500 Hrubieszów (PL)

(57) **Zusammenfassung**

Die vorliegende Erfindung betrifft eine Schaufel für eine Strömungsmaschine mit einer äußeren Hülle (5) und einem inneren Kern (6), der von der äußeren Hülle zumindest teilweise umgeben ist, wobei die äußere Hülle aus einem Keramikkörper oder aus einem Körper aus einem Keramikmatrixverbundmaterial gebildet ist und wobei der innere Kern (6) aus einer faserverstärkten Keramik oder einem faserverstärkten Keramikmatrixverbundmaterial gebildet ist, wobei der innere Kern (6) eine höhere Porosität als die äußere Hülle aufweist. Bei der Herstellung der Schaufel wird zunächst die äussere Hülle gebildet und diese dann als Form für den inneren Kern verwendet, wobei der innere Kern als fliessfähige Mischung in die äussere Hülle eingefüllt und danach wärmebehandelt wird.

## Beschreibung

### HINTERGRUND DER ERFINDUNG

### GEBIET DER ERFINDUNG

Die vorliegende Erfindung betrifft eine Hybrid-Schaufel für Strömungsmaschinen, wie stationäre Gasturbinen oder Flugtriebwerke, wobei die Schaufel eine äußere Hülle und einen inneren Kern aufweist, der von der äußeren Hülle zumindest teilweise umgeben ist. Außerdem betrifft die Erfindung ein Herstellungsverfahren für eine derartige Schaufel.

### STAND DER TECHNIK

Strömungsmaschinen, wie stationäre Gasturbinen oder Flugtriebwerke, weisen eine Vielzahl von Lauf- und Leitschaufeln auf, die mit dem strömenden Fluid, wie Luft und Verbrennungsgase, in Wechselwirkung treten. Die Leit- und Laufschaufeln sind hierbei hohen Temperaturen und aggressiven Medien und hohen Drücken ausgesetzt. Zusätzlich kann es durch in die Strömungsmaschine gelangte Fremdstoffe und Gegenstände zu Erosion und Schlagbeanspruchungen kommen. Die Laufschaufeln müssen darüber hinaus hohe Zentrifugalkräfte durch die hohen Geschwindigkeiten, mit denen sie rotiert werden, aufnehmen, sodass Schaufeln von Strömungsmaschinen einem komplexen Anforderungsprofil hinsichtlich Festigkeit, Hochtemperaturfestigkeit, Oxidations- und Korrosionsbeständigkeit, Schlagfestigkeit usw. genügen müssen. Gleichzeitig soll jedoch das spezifische Gewicht insbesondere der Laufschaufeln niedrig sein, um Zentrifugalkräfte niedrig zu halten und die zu beschleunigende Masse gering zu halten bzw. bei Flugtriebwerken ein insgesamt geringes Gewicht der Strömungsmaschine zu ermöglichen.

Obwohl im Stand der Technik bereits eine Vielzahl von entsprechenden Schaufeln aus unterschiedlichen Materialien bekannt sind, besteht aufgrund des komplexen Anforderungsprofils weiterer Bedarf einer entsprechenden Optimierung, um Schaufeln mit einem geeigneten Eigenschaftsprofil bereitstellen zu können. Aus der Druckschrift US 2011/0 229 337 A1 ist beispielsweise eine keramische Hybridschaufel bekannt, die einen äußeren Hüllenbereich und einen inneren Kernbereich aufweist, wobei der äußere Hüllenbereich aus einem SiC/SiC-Material gebildet ist, während der innere Kernbereich aus einem Si/SiC-Verbundmaterial und einem monolithischen Keramikmaterial gebildet ist.

### OFFENBARUNG DER ERFINDUNG

### AUFGABE DER ERFINDUNG

Es ist Aufgabe der vorliegenden Erfindung eine Schaufel für eine Strömungsmaschine bereit zu stellen, die insbesondere für den Einsatz in Flugtriebwerken ein optimiertes Eigenschaftsprofil aufweist und vorzugsweise bei einem niedrigen spezifischen Gewicht eine gute Korrosions- und Oxidationsbeständigkeit sowie eine hohe Festigkeit, insbesondere Schlag- und Scherfestigkeit aufweist. Gleichwohl soll die entsprechende Schaufel einfach herstellbar und zuverlässig einsetzbar sein.

### TECHNISCHE LÖSUNG

Diese Aufgabe wird gelöst durch eine Schaufel mit den Merkmalen des Anspruchs 1 sowie einem Herstellungsverfahren für eine Schaufel einer Strömungsmaschine mit den Merkmalen des Anspruchs 6. Vorteilhafte Ausgestaltungen sind Gegenstand der abhängigen Ansprüche.

Die Erfindung schlägt ähnlich der Hybrid-Schaufel der US 2011/0 229 337 A1 eine Hybrid-Schaufel vor, die eine äußere Hülle und einen inneren Kern aufweist, wobei die äußere Hülle den inneren Kern zumindest teilweise umgibt. Unter teilweise Umgeben wird hierbei verstanden, dass die äußere Hülle in bestimmten Bereichen Öffnungen aufweisen kann, um von außen Zugang zum inneren Kern zu haben, was beispielsweise für die Herstellung erforderlich ist. Entsprechend umhüllt die äußere Hülle den inneren Kern vorzugsweise im Bereich von mehr als der Hälfte der Oberfläche des inneren Kerns, vorzugsweise mehr als 70% und insbesondere mehr als 90% der Oberfläche des inneren Kerns. Gemäß der Erfindung wird die äußere Hülle aus einem Keramikkörper oder aus einem Keramikmatrixverbundmaterial gebildet, während der innere Kern aus einer faserverstärkten Keramik oder aus einem faserverstärkten Keramikmatrixverbundmaterial gebildet wird. Zusätzlich weist der innere Kern eine höhere Porosität als die äußere Hülle auf. Durch die Faserverstärkung des inneren Kerns kann die Festigkeit des inneren Kerns verbessert werden, während gleichzeitig durch die höhere Porosität die Elastizität und die Bruchzähigkeit erhöht wird. Damit kann die erfindungsgemäße Hybrid-Schaufel die Vorteile des keramischen Materials mit einer verbesserten Schlagfestigkeit und Bruchzähigkeit vereinen, wobei zusätzlich durch die Porosität des inneren Kerns das spezifische Gewicht niedrig gehalten wird. Durch die Hochtemperaturbeständigkeit des Keramikmaterials kann die Einsatztemperatur einer entsprechenden Schaufel sehr hoch gewählt werden, was zum einen den Wirkungsgrad der Strömungsmaschine verbessern kann und zum anderen die Herstellung der Schaufel vereinfachen kann, da auf Kühlkanäle und dergleichen verzichtet werden kann.

Vorzugsweise ist die äußere Hülle aus einem kompakten Keramikkörper und der innere Kern aus einer porösen, faserverstärkten Keramik gebildet.

Statt eines homogenen Keramikmaterials kann auch ein Keramikmatrixverbundmaterial sowohl für die äußere Hülle als auch für den inneren Kern Verwendung finden, wobei das Keramikmatrixverbundmaterial ein Keramik-Keramik-Verbundmaterial oder ein Verbund aus einer Keramik und einer intermetallischen Verbindung sein kann. Bei einem Keramik-Keramik-Verbundmaterial ist das Keramikmatrixverbundmaterial aus mindestens zwei unterschiedlichen Keramiken ausgebildet, während bei einem Verbund aus einer Keramik und einer intermetallischen Verbindung eine Kombination aus diesen Materialien vorgesehen ist. Genauso wie ein homogenes Keramikmaterial, welches aus einem einheitlichen Keramikmaterial gebildet ist, kann das Keramikmatrixverbundmaterial für den Kern zusätzlich mit einer Faserverstärkung ausgebildet sein. Bei den Fasern für die faserverstärkte Keramik oder das faserverstärkte Keramikmatrixverbundmaterial kann es sich insbesondere um Fasern aus dem gleichen Keramikmaterial handeln, mit dem die Matrix des Keramikmatrixverbundmaterials bzw. das Keramikgrundmaterial der faserverstärkten Keramik gebildet ist, wobei die Fasern als sogenannte Whisker (Nadelkristalle) oder als zerhäckselte Keramikfasern eingesetzt werden können, beispielsweise mit Dimensionen im Bereich von 0,5 µm bis 2 µm, vorzugsweise 0,6 µm bis 1 µm bezüglich des Durchmessers und/oder einer Länge im Bereich von 5 µm bis 100 µm, vorzugsweise 10 µm bis 80 µm.

Als Keramikmaterial sowohl für die äußere Hülle als auch für die Matrix des Keramikmatrixverbundmaterials der Hülle oder des Kerns sowie die Fasern der faserverstärkten Keramik bzw. des faserverstärkten Keramikmatrixverbundmaterials kommen Hafniumdiborid, Zirkondiborid, Hafniumnitrid, Zirkonnitrid, Titancarbid, Titannitrid, Thoriumoxyd, Tantalcarbid sowie Mischungen mit einem der genannten Stoffe mit Siliziumcarbid in Frage.

Die äußere Hülle kann eine Wanddicke im Bereich von mindestens 1,5 mm bis 3 mm aufweisen.

Die Porosität der äußeren Hülle kann kleiner oder gleich 5 Vol.%, insbesondere kleiner oder gleich 1 Vol.% sein, sodass die äußere Hülle eine dichte und kompakte Form aufweist.

Die Porosität des inneren Kerns kann im Bereich von 10 Vol.% bis 30 Vol.%, insbesondere 15 Vol.% bis 23 Vol.% liegen, sodass ein erheblicher Anteil an Poren vorliegt, der entsprechend das Eigenschaftsprofil der Schaufel beeinflusst.

Die Herstellung einer entsprechenden Schaufel erfolgt erfindungsgemäß so, dass zunächst die äußere Hülle gefertigt wird und diese dann als Form für den inneren Kern genutzt wird. Die äußere Hülle kann durch ein generatives Verfahren, bei dem die Hülle lagenweise aus einem Pulvermaterial bzw. einer entsprechenden Mischung mit einem Lösungsmittel aufgebaut wird, beispielsweise durch ein 3D-Druckverfahren, oder durch Wachs- oder Kunststoffausschmelzverfahren hergestellt werden.

Die äußere Hülle kann in Form eines Grünkörpers, der durch die genannten Verfahren aus einem Keramikschlicker hergestellt worden ist, oder nach dem Brennen der äußeren Hülle als Form für den Kern eingesetzt werden.

Zur Herstellung des Kerns wird eine fließfähige Mischung aus einem Ausgangsmaterial hergestellt, die in den Hohlraum der zuvor hergestellten äußeren Hülle gefüllt werden kann. Das Ausgangsmaterial zur Herstellung der fließfähigen Mischung kann zur Erzeugung der Poren im inneren Kern der Schaufel Porenbildner, beispielsweise in Form von organischen Verbindungen, wie Nylon, Polyester, Acrylverbindungen, Epoxidharze und dergleichen aufweisen, die bei einer nachfolgenden Wärmebehandlung verbrannt bzw. in einen gasförmigen Zustand überführt werden können, um entsprechende Poren im inneren Kern der Schaufel zu bilden. Das Ausgangsmaterial für die fließfähige Mischung kann 20 bis 30 Vol.-% Porenbildner und 10 - 30 Vol.-%, insbesondere 15 - 25 Vol.-% Fasern sowie als Rest Keramikmaterial und/oder intermetallische Verbindungen aufweisen.

Als Keramikmaterial kommen wiederum sowohl für die Fasern als auch für das Matrixmaterial die oben genannten keramischen Stoffe in Frage. Das Ausgangsmaterial kann direkt als Pulvermischung Verwendung finden, oder zur Verbesserung der Fließfähigkeit mit einem Lösungsmittel vermischt werden, insbesondere mit einem organischen Lösungsmittel, wie beispielsweise Hexan, oder mit Wasser, insbesondere destilliertem Wasser.

Die fließfähige Mischung, die zur Bildung des inneren Kerns der Schaufel in den Hohlraum der äußeren Hülle der Schaufel eingefüllt wird, kann vor dem Einfüllen in die äußere Hülle homogenisiert werden, beispielsweise durch Rotationsmischer und/oder durch Ultraschallhomogenisieren. Dadurch kann erreicht werden, dass zum einen die Bestandteile homogen und gleichmäßig verteilt sind und zum anderen, dass die enthaltenen Fasern in Form von Whiskern bzw. Nadelkristallen in unterschiedlichen Richtungen orientiert sind, um so in verschiedene Richtungen ein gleichmäßiges, isotropes Eigenschaftsprofil bereit zu stellen.

Nach dem Einfüllen der fließfähigen Mischung in den Hohlraum der äußeren Hülle wird die mit der fließfähigen Mischung gefüllte, äußere Hülle einer Wärmebehandlung unterzogen, sodass zum einen die Porenbildner der fließfähigen Mischung in den gasförmigen Zustand

überführt und/oder ausgetrieben werden, um entsprechende Poren im inneren Kern der Schaufel auszubilden, und zum anderen werden das Keramikmaterial und/oder eventuell enthaltende intermetallische Verbindungen durch Sintern zu einem einzigen festen Schaufelkörper verbunden. Dabei können sowohl die äußere Hülle, sofern sie als Grünkörper als Form für den inneren Kern Verwendung gefunden hat, als auch der innere Kern gesintert werden, wobei gleichzeitig eine feste Verbindung zwischen dem inneren Kern und der äußeren Hülle erzeugt werden kann.

Die Wärmebehandlung kann bei einer Temperatur im Bereich von 1300°C bis 1700°C für eine Dauer von 2 oder mehr Stunden durchgeführt werden.

### KURZBESCHREIBUNG DER FIGUREN

Die beigefügten Zeichnungen zeigen in rein schematischer Weise in
- Figur 1: eine Seitenansicht einer erfindungsgemäßen Turbinenschaufel mit gestrichelt eingezeichnetem Kern,
- Figur 2: eine Seitenansicht der Turbinenschaufel aus Figur 1 mit gestrichelt eingezeichnetem Kern um 90 ° gedreht und in
- Figur 3: eine Querschnittsansicht der Turbinenschaufel aus Figur 1 mit gestrichelt eingezeichnetem Kern.

### AUSFÜHRUNGSBEISPIEL

Weitere Vorteile, Kennzeichen und Merkmale der vorliegenden Erfindung werden bei der nachfolgenden detaillierten Beschreibung eines Ausführungsbeispiels anhand der beigefügten Zeichnungen deutlich. Allerdings ist die Erfindung nicht auf dieses Ausführungsbeispiel beschränkt.

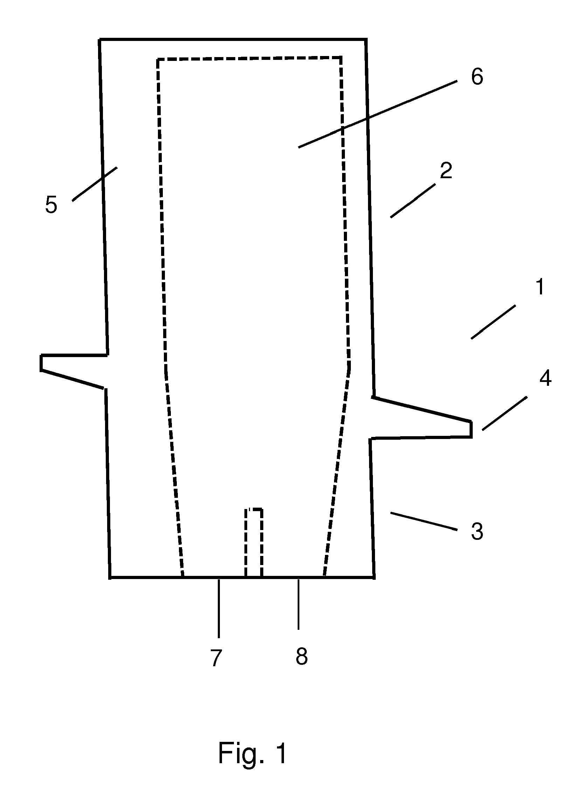

Die Figur 1 zeigt eine Seitenansicht einer Hochdruckturbinenschaufel 1 gemäß der vorliegenden Erfindung. Die Hochdruckturbinenschaufel 1 umfasst einen Schaufelblattbereich 2 und einen Fußbereich 3, mit dem die Turbinenschaufel 1 in eine Turbinenscheibe eingesetzt werden kann. Zwischen dem Schaufelblattbereich 2 und dem Fußbereich 3 ist ein inneres Deckband 4 vorgesehen.

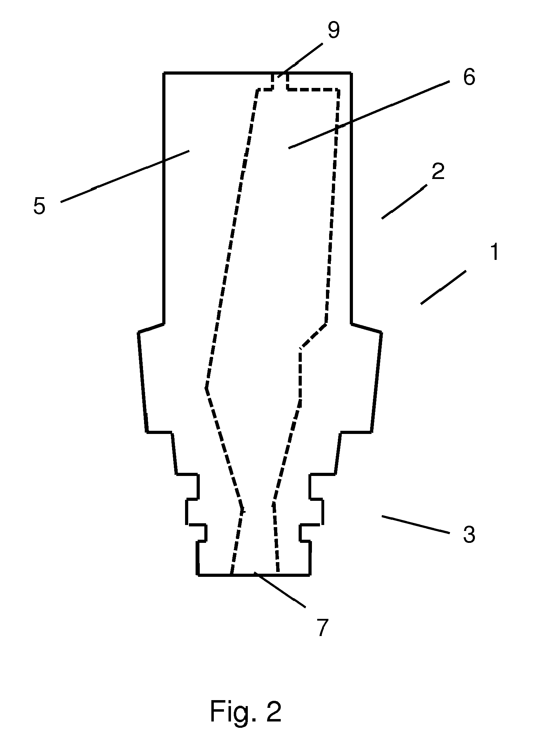

Gemäß der Erfindung umfasst die in den Figuren 1 bis 3 gezeigte Hochdruckturbinenschaufel 1 eine äußere Hülle 5 und einen inneren Kern 6. Die äußere Hülle 5 kann aus einer dichten, kompakten Keramik gebildet sein, die beispielsweise Hafniumdiborid, Zirkondiborid, Hafniumnitrid, Zirkonnitrid, Titancarbid, Titannitrid, Thoriumdioxid, Tantalcarbid und/oder Kombinationen der genannten Keramiken mit Beimengungen von Siliziumcarbid umfassen kann.

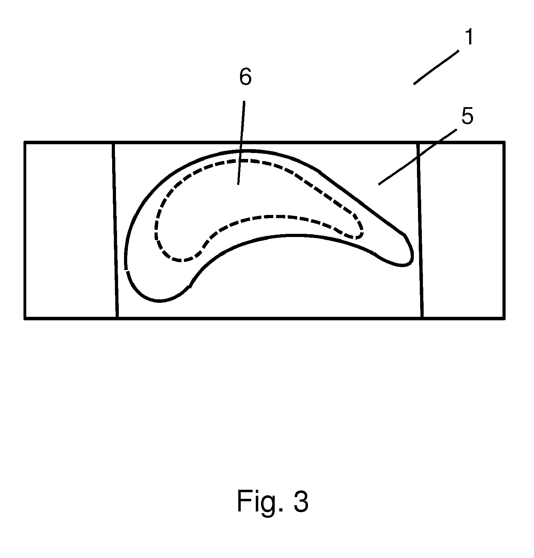

Der innere Kern 6, der bis auf die Eingießöffnungen 7 und 8 und die Entlüftungsöffnung 9 (siehe Figur 3) von der äußeren Hülle 5 umgeben ist, ist in dem gezeigten Ausführungsbeispiel durch einen porösen, faserverstärkten Keramikkörper gebildet, wobei sowohl die Fasern als auch die Keramikmatrix, in der die Fasern eingelagert sind, aus den gleichen Keramikmaterialien gebildet sein kann, wie die äußere Hülle 5. Insbesondere können auch Faser- und Matrixwerkstoff gleich sein. Die Fasern, die in der Keramikmatrix des inneren Kerns 6 eingelagert sind, können als abgehackte Keramikfasern oder als sogenannte Whisker (Nadelkristalle) vorliegen. Die Porosität des inneren Kerns 6 kann beispielsweise 20 Vol.% betragen.

Die Herstellung der Schaufel 1 erfolgt in der Weise, dass zunächst die äußere Hülle 5 gefertigt wird, wobei als Fertigungsverfahren ein 3D-Druckverfahren eingesetzt werden kann, bei welchem die Hülle 5 schichtweise mit einem Keramikschlicker gedruckt werden kann, um einen Grünkörper auszubilden. Darüber hinaus können alternativ auch andere Verfahren, wie Wachsausschmelz- bzw. Kunststoffausschmelzverfahren angewandt werden, bei welchem ein Modell des inneren Kerns 6 aus Wachs oder Kunststoff mit einem Keramikschlicker beschichtet wird, beispielsweise durch wiederholtes Eintauchen, sodass sich eine äußere Hülle um den Wachs- oder Kunststoffkern bildet. Die äußere Hülle kann dann zusätzlich entsprechend der äußeren Kontur der herzustellenden Schaufel geformt und das Wachs- bzw. Kunststoffmodell kann nach dem Brennen oder gleichzeitig mit dem Brennen des Keramikschlickes bzw. des daraus entstandenen Grünkörpers ausgeschmolzen werden, sodass ein Hohlkörper in Form der äußeren Hülle 5 hergestellt ist.

Der entsprechende Keramikkörper in Form der äußeren Hülle 5 oder ein Grünkörper nach Herstellung durch den 3D-Druck werden dann als Form für den inneren Kern 6 verwendet. Dazu wird eine fließfähige Mischung, die den inneren Kern 6 bildet, in die äußere Hülle 5 über die Eingießöffnungen 7 und 8 eingegossen, wobei Luft im Hohlraum der äußeren Hülle 5 durch die Entlüftungsöffnung 9 entweichen kann.

Die fließfähige Mischung weist ein Ausgangsmaterial auf, mit welchem der gewünschte innere Kern 6 der Schaufel 1 hergestellt werden kann. Bei dem vorgestellten Ausführungsbeispiel weist das Ausgangsmaterial ca. 20 Vol.% gehäckselte Keramikfasern sowie 25 Vol.% Porenbildner zur Erzeugung von Poren sowie als Rest entsprechendes Keramikmaterial in Form von Keramikpulver auf. Die Porenbildner können durch organische Stoffe, wie beispielsweise Nylon, Polyester, Acrylverbindungen oder Epoxidharze gebildet sein.

Die fließfähige Mischung kann darüber hinaus mit oder ohne flüssige Anteile gebildet sein. Vorzugsweise weist die fließfähige Mischung ein Lösungsmittel auf, wie beispielsweise ein organisches Lösungsmittel, wie Hexan, oder Wasser, insbesondere destilliertes Wasser.

Vor dem Einfüllen der fließfähigen Mischung in den Hohlraum der äußeren Hülle kann die fließfähige Mischung in einem Mischer gemischt werden, beispielsweise in einem Rotationsmischer mit einer Drehgeschwindigkeit von 15 000 bis 20 000 Umdrehungen pro Minute für eine Dauer von einigen Minuten, beispielsweise 2 Minuten. Nach dem Mischen kann die fließfähige Mischung in einen Ultraschallhomogenisierer gegeben werden, um eine möglichst homogene Mischung zu erhalten. Diese kann dann in die äußere Hülle 5 bzw. den Hohlraum der äußeren Hülle 5 eingefüllt werden.

Durch eine Wärmebehandlung der mit der fließfähigen Mischung gefüllten, äußeren Hülle 5 bei einer Temperatur von 1300°C bis 1700 °C für eine Dauer von 2 oder mehr Stunden werden die Porenbildner in die Gasphase überführt, um die gewünschten Poren im inneren Kern 6 auszubilden. Gleichzeitig sintert das keramische Material zu einem Keramikkörper, wobei gleichzeitig der innere Kern 6 und die äußere Hülle 5 mit einander verbunden werden.

Damit wird eine Schaufel 1 mit einem porösen, inneren Kern 6 mit einer kompakten, dichten, äußeren Hülle 5 gebildet, bei der zusätzlich der innere Kern 6 Keramikfasern aufweist. Eine derartige Schaufel 1 weist aufgrund der Struktur eine verbesserte Bruchzähigkeit auf, wobei gleichzeitig ein niedriges, spezifisches Gewicht erzielt wird. Durch den Einbau von gehackten Keramikfasern bzw. Nadelkristallen in den inneren Kern, wird die Zugfestigkeit der Schaufel verbessert, während durch die Porosität des inneren Kerns die Scherfestigkeit und die Elastizität verbessert werden.

Obwohl die vorliegende Erfindung anhand des Ausführungsbeispiels detailliert beschrieben worden ist, ist für einen Fachmann selbstverständlich, dass die Erfindung nicht durch dieses Ausführungsbeispiel beschränkt ist, sondern dass vielmehr Abwandlungen in der Weise möglich sind, dass einzelne Merkmale weggelassen oder andersartige Kombinationen von Merkmalen verwirklicht werden können, ohne dass der Schutzbereich der beigefügten Ansprüche verlassen wird. Die vorliegende Offenbarung schließt sämtliche Kombinationen der vorgestellten Einzelmerkmale mit ein.

### BEZUGSZEICHENLISTE

- 1: Schaufel, Hochdruckturbinenschaufel
- 2: Schaufelblattbereich
- 3: Fußbereich
- 4: Deckband
- 5: äußere Hülle
- 6: innerer Kern
- 7: Eingießöffnung
- 8: Eingießöffnung
- 9: Entlüftungsöffnung

## Patentansprüche

1. Schaufel (1) für eine Strömungsmaschine mit einer äußeren Hülle (5) und einem inneren Kern (6), der von der äußeren Hülle (5) zumindest teilweise umgeben ist,
**dadurch gekennzeichnet, dass**
die äußere Hülle (5) aus einem Keramikkörper oder aus einem Körper aus einem Keramikmatrixverbundmaterial gebildet ist und dass der innere Kern (6) aus einer faserverstärkten Keramik oder einem faserverstärkten Keramikmatrixverbundmaterial gebildet ist, wobei der innere Kern (6) eine höhere Porosität als die äußere Hülle (5) aufweist.

2. Schaufel (1) nach Anspruch 1,
**dadurch gekennzeichnet, dass**
die äußere Hülle (5) aus einem kompakten Keramikkörper und der innere Kern (6) aus einer porösen, faserverstärkten Keramik gebildet sind.

3. Schaufel (1) nach einem der vorhergehenden Ansprüche,
**dadurch gekennzeichnet, dass**
das Keramikmatrixverbundmaterial ein Keramik-Keramik-Verbundmaterial oder ein Verbund aus einer Keramik und einer intermetallischen Verbindung ist.

4. Schaufel (1) nach einem der vorhergehenden Ansprüche,
**dadurch gekennzeichnet, dass**
die Porosität der äußeren Hülle (5) kleiner oder gleich 5 Vol.%, insbesondere kleiner oder gleich 1 Vol.% beträgt und/oder die Porosität des inneren Kerns (6) im Bereich von 10 bis 30 Vol.%, insbesondere 15 bis 23 Vol.% liegt.

5. Schaufel (1) nach einem der vorhergehenden Ansprüche,
**dadurch gekennzeichnet, dass**
das Keramikmaterial aus dem eine Komponente aus einer Gruppe, die den Keramikkörper der äußeren Hülle (5) und das Keramikmatrixverbundmaterial der äußeren Hülle (5) und des inneren Kerns (6) sowie Fasern der faserverstärkten Keramik und Fasern des Keramikmatrixverbundmaterials umfasst, aus mindestens einem Material gefertigt ist, das aus einer Gruppe ausgewählt ist, die HfB₂, ZrB₂, HfN, ZrN, TiC, TiN, ThO₂,TaC und Mischungen von mindestens einem der genannten Stoffe mit SiC umfasst.

6. Verfahren zur Herstellung einer Schaufel einer Strömungsmaschine, insbesondere einer Schaufel nach einem der vorhergehenden Ansprüche, bei welchem zunächst eine äußere Hülle (5) der Schaufel (1) aus einem Keramikkörper oder aus einem Körper aus einem Keramikmatrixverbundmaterial gebildet wird, wobei die äußere Hülle (5) der Schaufel (1) in einem nachfolgenden Verfahrensschritt als Form für den inneren Kern (6) verwendet wird, wobei der innere Kern (6) durch eine fließfähige Mischung gebildet wird, die in die äußere Hülle (5) eingefüllt wird, und wobei die fließfähige Mischung und die äußere Hülle (5) durch eine Wärmebehandlung zur Schaufel (1) ausgebildet werden.

7. Verfahren nach Anspruch 6,
**dadurch gekennzeichnet, dass**
die äußere Hülle (5) durch ein generatives Verfahren, insbesondere ein dreidimensionales Druckverfahren, oder durch ein Wachs- oder Kunststoffausschmelzverfahren hergestellt wird.

8. Verfahren nach einem der Ansprüche 6 bis 7,
**dadurch gekennzeichnet, dass**
zur Herstellung der äußeren Hülle (5) ein Keramikschlicker verwendet wird, der zu einem Grünkörper geformt wird, wobei der Grünkörper direkt oder nach einer Wärmebehandlung als Form für den inneren Kern (6) eingesetzt wird.

9. Verfahren nach einem der Ansprüche 6 bis 8,
**dadurch gekennzeichnet, dass**
die fließfähige Mischung ein Ausgangsmaterial mit 10 bis 30 Vol.%, insbesondere 15 bis 25 Vol.% Fasern, 20 bis 30 Vol.% Porenbildner und Rest Keramikmaterial und/oder intermetallische Verbindungen umfasst.

10. Verfahren nach Anspruch 9,
**dadurch gekennzeichnet, dass**
das Ausgangsmaterial mit Lösungsmittel, insbesondere Hexan oder destilliertem Wasser, zur fließfähigen Mischung vermischt wird.

11. Verfahren nach einem der Ansprüche 6 bis 10,
**dadurch gekennzeichnet, dass**
die fließfähige Mischung vor dem Einfüllen in die äußere Hülle (5) homogenisiert wird.

12. Verfahren nach einem der Ansprüche 6 bis 11,
**dadurch gekennzeichnet, dass**
das Keramikmaterial für mindestens einen Bestandteil aus einer Gruppe, die den Keramikschlicker und das Keramikmaterial der fließfähigen Mischung und die Fasern der fließfähigen Mischung umfasst, aus mindestens einem Material aus einer Gruppe ausgewählt ist, die HfB₂, ZrB₂, HfN, ZrN, TiC, TiN, ThO₂,TaC und Mischungen von mindestens einem der genannten Stoffe mit SiC umfasst.

13. Verfahren nach einem der Ansprüche 6 bis 12,
**dadurch gekennzeichnet, dass**
die äußere Hülle (5) und die fließfähige Mischung in der äußere Hülle (5) bei einer Temperatur im Bereich von 1300°C bis 1700°C für eine Dauer von gleich oder mehr als 2 Stunden ausgelagert werden.

## Geänderte Patentansprüche

### Geänderte Patentansprüche gemäss Regel 137(2) EPÜ.

1. Schaufel (1) für eine Strömungsmaschine mit einer äußeren Hülle (5) und einem inneren Kern (6), der von der äußeren Hülle (5) zumindest teilweise umgeben ist, wobei die äußere Hülle (5) aus einem Keramikkörper oder aus einem Körper aus einem Keramikmatrixverbundmaterial gebildet ist und wobei der innere Kern (6) aus einer faserverstärkten Keramik oder einem faserverstärkten Keramikmatrixverbundmaterial gebildet ist,
**dadurch gekennzeichnet, dass**
der innere Kern (6) eine höhere Porosität als die äußere Hülle (5) aufweist und die Porosität des inneren Kerns (6) im Bereich von 10 bis 30 Vol.% liegt.

2. Schaufel (1) nach Anspruch 1,
**dadurch gekennzeichnet, dass**
die äußere Hülle (5) aus einem kompakten Keramikkörper und der innere Kern (6) aus einer porösen, faserverstärkten Keramik gebildet sind.

3. Schaufel (1) nach einem der vorhergehenden Ansprüche,
**dadurch gekennzeichnet, dass**
das Keramikmatrixverbundmaterial ein Keramik-Keramik-Verbundmaterial oder ein Verbund aus einer Keramik und einer intermetallischen Verbindung ist.

4. Schaufel (1) nach einem der vorhergehenden Ansprüche,
**dadurch gekennzeichnet, dass**
die Porosität der äußeren Hülle (5) kleiner oder gleich 5 Vol.%, insbesondere kleiner oder gleich 1 Vol.% beträgt und/oder die Porosität des inneren Kerns (6) im Bereich von 15 bis 23 Vol.% liegt.

5. Schaufel (1) nach einem der vorhergehenden Ansprüche,
**dadurch gekennzeichnet, dass**
das Keramikmaterial aus dem eine Komponente aus einer Gruppe, die den Keramikkörper der äußeren Hülle (5) und das Keramikmatrixverbundmaterial der äußeren Hülle (5) und des inneren Kerns (6) sowie Fasern der faserverstärkten Keramik und Fasern des Keramikmatrixverbundmaterials umfasst, aus mindestens einem Material gefertigt ist, das aus einer Gruppe ausgewählt ist, die HfB₂, ZrB₂, HfN, ZrN, TiC, TiN, ThO₂,TaC und Mischungen von mindestens einem der genannten Stoffe mit SiC umfasst.

6. Verfahren zur Herstellung einer Schaufel einer Strömungsmaschine nach einem der vorhergehenden Ansprüche, bei welchem zunächst eine äußere Hülle (5) der Schaufel (1) aus einem Keramikkörper oder aus einem Körper aus einem Keramikmatrixverbundmaterial gebildet wird, wobei die äußere Hülle (5) der Schaufel (1) in einem nachfolgenden Verfahrensschritt als Form für den inneren Kern (6) verwendet wird, wobei der innere Kern (6) durch eine fließfähige Mischung gebildet wird, die in die äußere Hülle (5) eingefüllt wird, und wobei die fließfähige Mischung und die äußere Hülle (5) durch eine Wärmebehandlung zur Schaufel (1) ausgebildet werden, wobei die fließfähige Mischung ein Ausgangsmaterial mit 10 bis 30 Vol.% Fasern, 20 bis 30 Vol.% Porenbildner und Rest Keramikmaterial und/oder intermetallische Verbindungen umfasst.

7. Verfahren nach Anspruch 6,
**dadurch gekennzeichnet, dass**
die äußere Hülle (5) durch ein generatives Verfahren, insbesondere ein dreidimensionales Druckverfahren, oder durch ein Wachs- oder Kunststoffausschmelzverfahren hergestellt wird.

8. Verfahren nach einem der Ansprüche 6 bis 7,
**dadurch gekennzeichnet, dass**
zur Herstellung der äußeren Hülle (5) ein Keramikschlicker verwendet wird, der zu einem Grünkorper geformt wird, wobei der Grünkorper direkt oder nach einer Wärmebehandlung als Form für den inneren Kern (6) eingesetzt wird.

9. Verfahren nach einem der Ansprüche 6 bis 8,
**dadurch gekennzeichnet, dass**
die fließfähige Mischung ein Ausgangsmaterial mit 15 bis 25 Vol.% Fasern umfasst.

10. Verfahren nach Anspruch 9,
**dadurch gekennzeichnet, dass**
das Ausgangsmaterial mit Lösungsmittel, insbesondere Hexan oder destilliertem Wasser, zur fließfähigen Mischung vermischt wird.

11. Verfahren nach einem der Ansprüche 6 bis 10,
**dadurch gekennzeichnet, dass**
die fließfähige Mischung vor dem Einfüllen in die äußere Hülle (5) homogenisiert wird.

12. Verfahren nach einem der Ansprüche 6 bis 11,
**dadurch gekennzeichnet, dass**
Material für mindestens einen Bestandteil aus einer Gruppe, die Keramikschlicker zur Herstellung der äußeren Hülle und das Keramikmaterial der fließfähigen Mischung und die Fasern der fließfähigen Mischung umfasst, aus mindestens einem Material aus einer Gruppe ausgewählt ist, die HfB₂, ZrB₂, HfN, ZrN, TiC, TiN, ThO₂,TaC und Mischungen von mindestens einem der genannten Stoffe mit SiC umfasst.

13. Verfahren nach einem der Ansprüche 6 bis 12,
**dadurch gekennzeichnet, dass**
die äußere Hülle (5) und die fließfähige Mischung in der äußere Hülle (5) bei einer Temperatur im Bereich von 1300°C bis 1700°C für eine Dauer von gleich oder mehr als 2 Stunden ausgelagert werden.
